(19) 

Europäisches
Patentamt

European
Patent Office

Office européen
des brevets

(11) **EP 4 742 349 A1**

(12) **EUROPEAN PATENT APPLICATION**
published in accordance with Art. 153(4) EPC

(43) Date of publication:
**13.05.2026 Bulletin 2026/20**

(21) Application number: **24847506.3**

(22) Date of filing: **22.01.2024**

(51) International Patent Classification (IPC):
**H01M 10/0525** (2010.01) **H01M 10/0567** (2010.01)
**H01M 4/13** (2010.01)

(52) Cooperative Patent Classification (CPC):
Y02E 60/10

(86) International application number:
**PCT/CN2024/073529**

(87) International publication number:
**WO 2025/025537 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 03.08.2023 CN 202310972751
25.12.2023 CN 202311814877

(71) Applicant: **Sunwoda Mobility Energy Technology
Co., Ltd.
Shenzhen, Guangdong 518107 (CN)**

(72) Inventors:
• **CHENG, Shouqiang
Shenzhen, Guangdong 518107 (CN)**
• **LI, Lei
Shenzhen, Guangdong 518107 (CN)**

(74) Representative: **Metida
Gyneju str. 16
01109 Vilnius (LT)**

(54) **SECONDARY BATTERY AND ELECTRICAL DEVICE**

(57)    A secondary battery and an electrical device are provided. In the present disclosure, by controlling a negative electrode plate of the secondary battery, a negative electrode active material and an electrolyte to satisfy Formula (I), the secondary battery can be ensured to have excellent cycling and storage stability:

$$0.35 \leq \frac{m \times C \times P \times D_{V50}}{W} \leq 12.0$$

(I).

EP 4 742 349 A1

**Description**

## TECHNICAL FIELD

The present disclosure relates to the field of battery technology, in particular to a secondary battery and an electrical device.

## BACKGROUND

In recent years, batteries, such as lithium-ion batteries, have been widely used in the field of consumer electronics due to their advantages, including high voltage platforms, high energy density, absence of memory effect, and long lifespan. At the same time, increasingly severe global environmental challenges, fossil fuel shortages and the like are rapidly driving the development of electric vehicles. As core components of electric vehicles, lithium-ion batteries are confronted with increasing demands for improved cycling performance and storage stability.

Therefore, there is an urgent need for a secondary battery with excellent cycling and storage stability.

## SUMMARY OF THE DISCLOSURE

To provide a secondary battery with excellent cycling and storage stability, in the present disclosure, by comprehensively designing a negative electrode plate of the secondary battery, intrinsic parameters of a negative electrode active material and an additive amount of an electrolyte additive, an appropriate additive range of the electrolyte additive can be rapidly determined, thereby ensuring that the secondary battery satisfies the requirements for good performance.

To achieve the above objective, in a first aspect, the present disclosure provides a secondary battery, including a positive electrode plate, a negative electrode plate, an electrolyte and a separator, where the negative electrode plate includes a negative electrode current collector and a negative electrode active material layer disposed on at least one surface of the negative electrode current collector, the negative electrode active material layer includes a negative electrode active material, the electrolyte includes a phosphate ester additive, and the secondary battery satisfies a relationship as follows:

$$0.35 \leq \frac{m \times C \times P \times D_{V50}}{W} \leq 12.0,$$

where $m$, in g/Ah, represents a filling coefficient of the electrolyte in the secondary battery;

$C$ represents a percent concentration by mass of the phosphate ester additive in the electrolyte of the secondary battery;

$P$, in g/cm$^3$, represents a compaction density of the negative electrode active material layer;

$D_{V50}$, in $\mu$m, represents a particle size of the negative electrode active material at 50% of cumulative volume distribution;

$W$, in g/1540.25 mm$^2$, represents an areal density of the negative electrode active material layer.

In some embodiments, the secondary battery satisfies a relationship as follows:

$$1.9 \leq \frac{m \times C \times P \times D_{V50}}{W} \leq 3.0.$$

In some embodiments, the filling coefficient m, in g/Ah, of the electrolyte is in a range of from 2 g/Ah to 5 g/Ah.

In some embodiments, the percent concentration by mass $C$ of the phosphate ester additive in the electrolyte is in a range of from 0.1wt% to 3 wt%.

In some embodiments, the compaction density $P$, in g/cm$^3$, of the negative electrode active material layer is in a range of from 1.2 g/cm$^3$ to 1.8 g/cm$^3$.

In some embodiments, the $D_{V50}$, in $\mu$m, of the negative electrode active material is in a range of from 4$\mu$m to 18 $\mu$m.

In some embodiments, the areal density $W$, in g/1540.25mm$^2$, of the negative electrode active material layer is in a range of from 0.08 g/1540.25mm$^2$ to 0.28 g/1540.25mm$^2$.

In some embodiments, the electrolyte further includes a lithium salt, and the lithium salt includes at least one selected from the group consisting of lithium hexafluorophosphate, lithium tetrafluoroborate, lithium bis(fluorosulfonyl)imide, lithium difluorophosphate, lithium difluoro(bisoxalato)phosphate, lithium bis(trifluoromethanesulfonyl)imide, lithium difluoro(oxalato)borate, and lithium bis(oxalato)borate.

In some embodiments, the electrolyte further includes an organic solvent, and the organic solvent includes at least one selected from the group consisting of a cyclic carbonate, a chain carbonate, and a chain carboxylate.

In some embodiments, the phosphate ester additive includes at least one selected from the group consisting of tris(trimethylsilyl)phosphate and tripropargyl phosphate.

In some embodiments, the positive electrode plate includes a positive electrode current collector and a positive electrode active material layer disposed on at least one surface of the positive electrode current collector, the positive electrode active material layer includes a positive electrode active material, and the positive electrode active material includes a lithium nickel cobalt oxide and/or a lithium iron oxide.

In some embodiments, the negative electrode active material includes at least one selected from the group consisting of graphite and a silicon-based material.

In a second aspect, the present disclosure provides an electrical device, including the aforementioned secondary battery.

Compared to the prior art, the present disclosure has the following beneficial effects:

In the present disclosure, by controlling the design of the negative electrode plate of the battery, the intrinsic parameters of the negative electrode active material, and the additive amount of the electrolyte additive, a solid electrolyte interface (SEI) film of the prepared battery can be controlled to have an improved active ion conduction performance, thereby providing an improvement foundation for cycling performance, storage stability, and gas production of the battery.

## DETAILED DESCRIPTION

For better illustration of the objectives, technical solutions, and advantages of the present disclosure, the present disclosure will be further illustrated herein below with reference to specific examples, but these examples do not limit the present disclosure in any way. Unless otherwise specified, reagents, methods, and devices used in this disclosure are conventional ones in the art. Unless otherwise specified, all reagents and materials used in the present disclosure are commercially available.

In an example of the present disclosure, a secondary battery is provided, and the battery includes a positive electrode plate, a negative electrode plate, an electrolyte, and a separator; where the negative electrode plate includes a negative electrode current collector and a negative electrode active material layer disposed on at least one surface of the negative electrode current collector; the negative electrode active material layer includes a negative electrode active material, and the electrolyte includes a phosphate ester additive; the secondary battery satisfies a relationship as follows:

$$0.35 \leq \frac{m \times C \times P \times D_{V50}}{W} \leq 12.0,$$

where $m$, in g/Ah, represents a filling coefficient of the electrolyte in the secondary battery;

$C$ represents a mass percent concentration of the phosphate ester additive in the electrolyte of the secondary battery;

$P$, in g/cm$^3$, represents a compaction density of the negative electrode active material layer;

$D_{V50}$, in $\mu$m, represents a particle size of the negative electrode active material at 50% of cumulative volume distribution;

$W$, in g/1540.25 mm$^2$, represents an areal density of the negative electrode active material layer.

In the secondary battery, the additive, as a crucial component of the electrolyte, can optimize the composition of the SEI film and play a significant role in the cycling performance and storage stability of the battery. Consumption of the electrolyte primarily stems from the film formation reaction on the negative electrode and side reactions caused by electron tunneling during cycling. In the present disclosure, by comprehensively designing the negative electrode plate of the battery, the intrinsic parameters of the negative electrode active material and the additive amount of the additive in the electrolyte, and enabling a relational value among these factors to fall within an appropriate range, an excellent cycling and storage stability of the secondary battery can be ensured.

In some examples of the present disclosure, the filling coefficient of the electrolyte m, in g/Ah, is 2-5 g/Ah. For example, the filling coefficient of the electrolyte m, in g/Ah, can be 2 g/Ah, 3 g/Ah, 4 g/Ah, 5 g/Ah, or a range defined by any two of these values. To ensure normal cycling of the secondary battery throughout its lifecycle, it is necessary to maintain a sufficient amount of the electrolyte after formation of the secondary battery to ensure wettability of the sheets, support the formation of a stable SEI film on the negative electrode, and maintain a low internal resistance. By limiting the filling coefficient of the electrolyte to the above reasonable range, black spots occurring on the electrode interface due to insufficient electrolyte and battery failure due to excessive internal resistance can be prevented, and meanwhile safety hazards caused by excessive electrolyte can also be avoided, thereby effectively extending the service life of the battery.

The secondary battery further satisfies a relationship of: $1.9 \leq \dfrac{m \times C \times P \times D_{V50}}{W} \leq 3.0$.

In some examples of the present disclosure, the percent concentration by mass C of the phosphate ester additive in the electrolyte is in a range of from 0.1 wt% to 3 wt%. For example, the percent concentration by mass C of the phosphate ester additive may be 0.1 wt%, 0.5 wt%, 1 wt%, 1.2 wt%, 1.5 wt%, 1.8 wt%, 2 wt%, 2.2 wt%, 2.5 wt%, 2.8 wt%, 3 wt%, or a range defined by any two of the above values. The phosphate ester additive can optimize the composition of the SEI film of the secondary battery and play a significant role in the performance of the secondary battery. The addition of the additive can improve ionic conductivity between the positive electrode and the negative electrode, reduce the internal impedance of the battery, and form an SEI film on the negative electrode, thereby enhancing the cycling stability of the battery. In some examples, when more than one phosphate ester additives are included, those skilled in the art can determine, without doubt, that the percent concentration by mass C of the phosphate ester additive in the electrolyte refers to the sum of the percent concentrations by mass of all phosphate ester additives in the electrolyte.

In some examples of the present disclosure, the phosphate ester additive includes at least one selected from the group consisting of tris(trimethylsilyl)phosphate (TMSP) and tripropargyl phosphate (TPP).

In some examples of the present disclosure, the compaction density $P$, in g/cm$^3$, of the negative electrode plate is in a range of from 1.2 g/cm$^3$ to 1.8 g/cm$^3$. For example, the compaction density P, in g/cm$^3$, of the negative electrode plate can be 1.2 g/cm$^3$, 1.3 g/cm$^3$, 1.4 g/cm$^3$, 1.5 g/cm$^3$, 1.6 g/cm$^3$, 1.7 g/cm$^3$, 1.8 g/cm$^3$, or a range defined by any two of the above values. When the compaction density falls within the above-mentioned suitable range, the prepared battery exhibits both high energy density and good cycling and storage stability.

In some examples of the present disclosure, a $D_{V50}$, in $\mu$m, of the negative electrode active material is in a range of from 4 $\mu$m to 18 $\mu$m, where $D_{V50}$ represents a particle size of the negative electrode active material at 50% of cumulative volume distribution. For example, the $D_{V50}$, in $\mu$m, of the negative electrode active material can be 4 $\mu$m, 6 $\mu$m, 8 $\mu$m, 10 $\mu$m, 12 $\mu$m, 14 $\mu$m, 16 $\mu$m, 18 $\mu$m, or a range defined by any two of the above values. The value of $D_{V50}$ of the negative electrode active material within this range can ensure sufficient contact and wetting between the negative electrode active material and the electrolyte, thereby facilitating rapid ion diffusion within the negative electrode active material. The value of $D_{V50}$ within this range also can provide an appropriate specific surface area, so that excessive active sites will not be exposed to consume the electrolyte and numerous side reactions will not be triggered, thereby improving cycling and storage stability of the battery.

In some examples of the present disclosure, the areal density W, in g/1540.25 mm$^2$, of the negative electrode active material layer is in a range of from 0.08 g/1540.25 mm$^2$ to 0.28 g/1540.25 mm$^2$. For example, the areal density W, in g/1540.25 mm$^2$, of the negative electrode active material layer may be 0.08 g/1540.25mm$^2$, 0.12 g/1540.25mm$^2$, 0.14 g/1540.25mm$^2$, 0.16 g/1540.25mm$^2$, 0.18 g/1540.25mm$^2$, 0.2 g/1540.25mm$^2$, 0.22 g/1540.25mm$^2$, 0.24 g/1540.25mm$^2$, 0.26 g/1540.25mm$^2$, 0.28 g/1540.25mm$^2$, or a range defined by any two of the foregoing values. A suitable areal density of the negative electrode active material layer can provide a large number of lithium intercalation sites on the negative electrode, thereby mitigating polarization and lithium plating phenomena during a charge and discharge process of the battery.

It should be noted that in the present disclosure, the areal density of the negative electrode active material layer is measured by using a die to extract the negative electrode active material layer within a fixed area and weighing it, then calculating the areal density of the negative electrode active material layer according to "weight/die area". The area of the negative electrode active material layer extracted by the die in the present disclosure is 1540.25 mm$^2$.

For the components of the secondary battery in the present disclosure, the electrolyte further includes an electrolyte salt. For example, in a lithium-ion secondary battery, the electrolyte salt is a lithium salt. Common lithium salts used in lithium-ion batteries in the art can be used in the present disclosure. For example, the lithium salt includes, but is not limited to, at least one selected from the group consisting of lithium hexafluorophosphate, lithium tetrafluoroborate, lithium bis(fluorosulfonyl)imide (LiFSI), lithium difluorophosphate, lithium difluoro(bisoxalato)phosphate (LiDFOP), lithium bis(trifluoromethanesulfonyl)imide (LiTFSI), lithium difluoro(oxalato)borate (LiDFOB), and lithium bis(oxalato)borate (LiBOB).

For the components of the secondary battery in the present disclosure, the electrolyte also includes an organic solvent, including but not limited to at least one selected from the group consisting of a cyclic carbonate, a chain carbonate, and a chain carboxylate. The cyclic carbonate may be one or a combination of two or more selected from the group consisting of propylene carbonate (PC), ethylene carbonate (EC), $\gamma$-butyrolactone (GBL), butylene carbonate (BC), and fluoroethylene carbonate (FEC); the chain carbonate may be one or a combination of two or more selected from the group consisting of dimethyl carbonate (DMC), ethyl methyl carbonate (EMC), diethyl carbonate (DEC), dipropyl carbonate (DPC), and methyl propyl carbonate (MPC); and the chain carboxylate may be one or a combination of two or more selected from the group consisting of ethyl acetate (EA), propyl acetate (PA), methyl propionate (MP), ethyl propionate (EP), propyl propionate (PP), methyl butyrate (MB), and ethyl butyrate (EB).

For the components of the secondary battery in the present disclosure, the electrolyte may also include other additives, including but not limited to a sulfur-based additive.

In some examples of the present disclosure, the positive electrode active material includes lithium nickel cobalt oxide and/or lithium iron oxide. In some examples, the lithium nickel cobalt oxide includes a compound represented by a molecular formula $Li_xNi_aCo_bM_cO_2$, where M is Mn and/or Al, $0.95 \leq x \leq 1.2$, $0 < a < 1$, $0 < b < 1$, $0 < c < 1$, and $a+b+c=1$.

In some examples of the present disclosure, the negative electrode active material includes at least one selected from the group consisting of graphite and a silicon-based material.

In some examples of the present disclosure, a resistance of the secondary battery is less than or equal to 20 m$\Omega$ at 25°C. The resistance of the battery at 25°C within this range enables the secondary battery to exhibit better overall performance.

In a second aspect of the present disclosure, an electrical device is provided, including the aforementioned secondary battery.

The following are specific examples of the present disclosure, and the technical solutions of the present disclosure are further described in conjunction with these examples, but the present disclosure is not limited to these examples. Unless otherwise specified, reagents, methods, and equipment used in this disclosure are all conventional ones in the art.

Example 1

In Example 1, a secondary battery was provided, and its preparation method included the following steps:

Preparation of Positive Electrode Plate

A positive electrode active material $LiNi_{0.6}Co_{0.2}Mn_{0.2}O_2$ (denoted as NCM622), a conductive agent acetylene black, and a binder polyvinylidene fluoride (PVDF) were mixed in a mass ratio of 96:2:2 to obtain a mixture, then 1-methyl-2-pyrrolidone (NMP) was added to the mixture and uniformly dispersed to form a uniform positive electrode slurry. The positive electrode slurry was coated on a positive electrode current collector, i.e., an aluminum foil, and then dried, cold pressed, and slit to obtain a positive electrode plate arranged with a positive electrode active material layer, where a compaction density of the positive electrode active material layer was 3.6 g/cm$^3$.

Preparation of Negative Electrode Plate

A negative electrode active material graphite, a conductive agent acetylene black, a thickener carboxymethyl cellulose (CMC), and a binder styrene butadiene rubber (SBR) were mixed uniformly in a mass ratio of 96.4:1:1.2:1.4 and a resulting mixture was dispersed evenly in deionized water to form a uniform negative electrode slurry. The negative electrode slurry was coated on a negative electrode current collector, i.e., a copper foil, and then dried, cold pressed, and slit to obtain a negative electrode plate arranged with a negative electrode active material layer. Parameters of the negative electrode plate were as follows:

a particle size $D_{V50}$ of the negative electrode active material: 12 $\mu$m;
a compaction density P of the negative electrode active material layer: 1.6 g/cm$^3$;
an areal density of the negative electrode active material layer: 0.122 g/1540.25 mm$^2$.

Preparation of Electrolyte

Ethylene carbonate (EC), ethyl methyl carbonate (EMC), and diethyl carbonate (DEC) were mixed in a mass ratio of 30:50:20 in an argon-filled glove box ($H_2O$<1ppm, $O_2$<1ppm) at room temperature (25±5°C). Then, water was removed using a 4Å molecular sieve to obtain a mixed solvent. A lithium salt (a common lithium salt used in lithium-ion batteries in the art can be used in the present disclosure, for example, the lithium salt included, but was not limited to, at least one selected from the group consisting of lithium hexafluorophosphate, lithium tetrafluoroborate, lithium bis(fluorosulfonyl)imide (LiFSI), lithium difluorophosphate, lithium difluoro(bisoxalato)phosphate (LiDFOP), lithium bis(trifluoromethanesulfonyl)imide (LiTFSI), lithium difluoro(oxalato)borate (LiDFOB) and lithium bis(oxalato)borate (LiBOB); in this example, $LiPF_6$ was exemplarily used; a concentration of the lithium salt described herein can be routinely selected and determined by those skilled in the art) was added gradually to the mixed solvent obtained, and a resulting mixture was continuously stirred and cooled with dry ice to control a temperature increment of the electrolyte no more than 2 °C. At this time, $LiPF_6$ was added again until a weight percentage of the lithium salt $LiPF_6$ in the electrolyte was 12.5%, ultimately resulting in a colorless, transparent liquid. Then, an additive, i.e., tris(trimethylsilyl)phosphate, was added in an amount equivalent to 0.5 wt% of a total mass of the electrolyte, and a resulting mixture was evenly stirred to obtain the electrolyte used in this example.

Assembly of Secondary Battery

The prepared positive electrode plate, a separator (commercially available polypropylene), and the negative electrode plate were stacked in order so that the separator was positioned between the positive electrode plate and the negative electrode plate. A bare battery was obtained by winding, hot pressing, shaping, and tab welding. The bare battery was then placed in a case, an aluminum-plastic film, and baked in an oven at 85±10°C for 24 hours. The prepared electrolyte was then filled into the dried bare battery. After standing, formation and grading, the lithium-ion battery was obtained. A filling coefficient, m, of the electrolyte in the secondary battery was 2.5 g/Ah.

Referring to the preparation method of Example 1, relevant parameters were varied during the secondary battery preparation process (see Table 1 for details) to obtain different secondary batteries.

Table 1 Relevant parameters of secondary batteries used in the examples and comparative Examples of the present disclosure

| | Filling coefficient, m, (g/Ah) | Concentration of phosphate ester additive, c | Compaction density of negative electrode active material layer, P, (g/cm$^3$) | Particle size of negative electrode active material, $D_{V50}$, ($\mu$m) | Areal density of negative electrode active material layer, W,(g/1540.25 mm$^2$) | $\dfrac{m \times C \times P \times D_{V50}}{W}$ |
|---|---|---|---|---|---|---|
| Example 1 | 2.5 | 0.5wt% | 1.6 | 12 | 0.122 | 1.97 |
| Example 2 | 2.5 | 0.5wt% | 1.2 | 12 | 0.122 | 1.48 |
| Example 3 | 2.5 | 0.5wt% | 1.4 | 12 | 0.122 | 1.72 |
| Example 4 | 2.5 | 0.5wt% | 1.8 | 12 | 0.122 | 2.21 |
| Example 5 | 2.5 | 0.5 wt% | 1.6 | 4 | 0.122 | 0.66 |
| Example 6 | 2.5 | 0.5 wt% | 1.6 | 8 | 0.122 | 1.31 |
| Example 7 | 2.5 | 0.5 wt% | 1.6 | 18 | 0.122 | 2.95 |
| Example 8 | 2.5 | 0.1 wt% | 1.6 | 12 | 0.122 | 0.39 |
| Example 9 | 2.5 | 1 wt% | 1.6 | 12 | 0.122 | 3.93 |
| Example 10 | 2.5 | 2 wt% | 1.6 | 12 | 0.122 | 7.87 |
| Example 11 | 2.5 | 3 wt% | 1.6 | 12 | 0.122 | 11.80 |
| Example 12 | 2 | 0.5 wt% | 1.6 | 12 | 0.122 | 1.57 |
| Example 13 | 3 | 0.5 wt% | 1.6 | 12 | 0.122 | 2.36 |
| Example 14 | 4 | 0.5 wt% | 1.6 | 12 | 0.122 | 3.15 |
| Example 15 | 5 | 0.5 wt% | 1.6 | 12 | 0.122 | 3.93 |
| Example 16 | 2.5 | 0.5 wt% | 1.6 | 12 | 0.080 | 3.00 |
| Example 17 | 2.5 | 0.5 wt% | 1.6 | 12 | 0.100 | 2.40 |
| Example 18 | 2.5 | 0.5 wt% | 1.6 | 12 | 0.150 | 1.60 |
| Example 19 | 2.5 | 0.5 wt% | 1.6 | 12 | 0.280 | 0.86 |
| Example 20 | 2 | 1.5 wt% | 1.8 | 4 | 0.080 | 2.70 |
| Example 21 | 3.5 | 1.5 wt% | 2 | 10 | 0.120 | 8.75 |
| Example 22 | 5 | 0.1 wt% | 1.2 | 18 | 0.060 | 1.80 |
| Comparative Example 1 | 0.3 | 0.5 wt% | 1.2 | 12 | 0.120 | 0.18 |
| Comparative Example 2 | 2.5 | 0.06 wt% | 1.2 | 12 | 0.120 | 0.18 |

(continued)

| | Filling coefficient t, m, (g/Ah) | Concentration of phosphate ester additive, c | Compaction density of negative electrode active material layer, P, (g/cm$^3$) | Particle size of negative electrode active material, $D_{V50}$, ($\mu$m) | Areal density of negative electrode active material layer, W,(g/1540.25 mm$^2$) | $\dfrac{m \times C \times P \times D_{V50}}{W}$ |
|---|---|---|---|---|---|---|
| Comparative Example 3 | 3 | 2.3 wt% | 6 | 4 | 0.120 | 13.80 |
| Comparative Example 4 | 5 | 3 wt% | 1.8 | 0.2 | 0.180 | 0.30 |
| Comparative Example 5 | 2 | 1.2 wt% | 1.6 | 12 | 0.020 | 23.04 |

The performance of the secondary batteries obtained in the above examples and comparative examples were tested. Specific testing items, testing methods and results were as follows:

1. Cycling Test at 25 °C: A cyclic charge-discharge test was performed in a thermostat at a constant temperature of 25 °C with a charge rate of 1C and a discharge rate of 1C. When the discharge capacity retention of the secondary battery reached 85%, the number of cycles was recorded.

2. Cycling Test at 45 °C: A cyclic charge-discharge test was performed in a thermostat at a constant temperature of 45 °C with a charge rate of 1C and a discharge rate of 1C. When the discharge capacity retention of the secondary battery reached 85%, the number of cycles was recorded.

3. A secondary battery at 100% state of charge (SOC) (fully charged state) was stored in an oven at 60 °C, a recovery capacity was tested every 7 days, and a maximum number of days during which the capacity was remained at or above 90% of the initial capacity was recorded.

4. A secondary battery at 100% SOC (fully charged state) was stored in an oven at 70 °C, and a volume change rate (%) of the secondary battery was calculated every 5 days using the water displacement method. The volume change rate = $(V_t-V_0)/V_0 \times 100\%$, where $V_t$ is a volume on Day t and $V_0$ is an initial volume of the secondary battery. A maximum number of days (d) during which the volume change rate was remained within 10% was recorded.

5. Direct Current Resistance (DCR) test at 25°C: A secondary battery was discharged at a 1C constant current (DC) to 2.5V, then charged at a 1C constant current (CC) to 4.25V; then, the secondary battery was further discharged at a 1C constant current (DC) for 30 minutes, discharged at a 5C constant current (DC) for 10 seconds and charged at a 5C constant current (CC) for 10 seconds. A resistance (in m$\Omega$) after cycling was measured.

Table 2 Results of performance testing of the secondary batteries prepared in the examples and comparative examples

| | $\dfrac{m \times C \times P \times D_{V50}}{W}$ | Number of cycles at 25 °C (cycles) | Number of cycles at 45 °C (cycles) | Storage days at 60 °C (days) | Storage days at 70 °C (days) | Resistance at 25 °C (m$\Omega$) |
|---|---|---|---|---|---|---|
| Example 1 | 1.97 | 2905 | 2212 | 320 | 265 | 15 |
| Example 2 | 1.48 | 2523 | 1535 | 260 | 240 | 16 |
| Example 3 | 1.72 | 2551 | 1825 | 300 | 255 | 15 |
| Example 4 | 2.21 | 2917 | 2252 | 320 | 260 | 14 |
| Example 5 | 0.66 | 2215 | 1231 | 250 | 220 | 17 |
| Example 6 | 1.31 | 2232 | 1424 | 240 | 235 | 17 |
| Example 7 | 2.95 | 2812 | 1705 | 350 | 265 | 12 |
| Example 8 | 0.39 | 2011 | 1007 | 240 | 220 | 17 |

(continued)

| | $\dfrac{m \times C \times P \times D_{V50}}{W}$ | Number of cycles at 25 °C (cycles) | Number of cycles at 45 °C (cycles) | Storage days at 60 °C (days) | Storage days at 70 °C (days) | Resistance at 25 °C (mΩ) |
|---|---|---|---|---|---|---|
| Example 9 | 3.93 | 2612 | 1652 | 310 | 240 | 13 |
| Example 10 | 7.87 | 2714 | 1651 | 300 | 240 | 15 |
| Example 11 | 11.8 | 2219 | 1422 | 300 | 230 | 16 |
| Example 12 | 1.57 | 2415 | 1511 | 280 | 240 | 16 |
| Example 13 | 2.36 | 3007 | 2022 | 350 | 280 | 13 |
| Example 14 | 3.15 | 2718 | 1650 | 330 | 255 | 13 |
| Example 15 | 3.93 | 2613 | 1610 | 320 | 250 | 14 |
| Example 16 | 3.00 | 2824 | 1650 | 330 | 265 | 13 |
| Example 17 | 2.40 | 3111 | 2009 | 360 | 285 | 12 |
| Example 18 | 1.6 | 2512 | 1580 | 300 | 240 | 15 |
| Example 19 | 0.86 | 2311 | 1505 | 260 | 235 | 17 |
| Example 20 | 2.70 | 3021 | 1812 | 360 | 285 | 12 |
| Example 21 | 8.75 | 2612 | 1605 | 310 | 230 | 15 |
| Example 22 | 1.80 | 2624 | 1805 | 310 | 260 | 14 |
| comparative Example 1 | 0.18 | 1105 | 502 | 150 | 80 | 25 |
| comparative Example 2 | 0.18 | 1011 | 505 | 160 | 90 | 26 |
| comparative Example 3 | 13.80 | 1009 | 912 | 190 | 120 | 35 |
| comparative Example 4 | 0.30 | 912 | 610 | 160 | 180 | 25 |
| comparative Example 5 | 23.04 | 804 | 812 | 180 | 90 | 40 |

From the above results, it can be seen that:

When the value of the formula was within the given range, the overall performance of a secondary battery was good. However, when the value of the formula was below the given lower limit, the cycling, storage, and gas production performances of the secondary battery were poor; when the value of the formula was greater than the given upper limit, the cycling and storage performances of the secondary battery were deteriorated, and the resistance was significantly deteriorated.

In summary, by establishing a relationship between negative electrode design parameters and a content of an additive in the electrolyte, the content of the additive in the electrolyte can be maintained within a reasonable range, thereby ensuring good performance of a secondary battery.

Finally, it should be noted that the above embodiments are intended only to illustrate the technical solutions of this disclosure, rather than to limit the scope of protection of this disclosure. Although this disclosure has been described in detail with reference to the preferred embodiments, those skilled in the art will understand that the technical solutions of this disclosure may be modified or replaced with equivalents, without departing from the spirit and scope of the technical solutions of this disclosure.

Claims

1.    A secondary battery, comprising a positive electrode plate, a negative electrode plate, an electrolyte, and a separator, wherein the negative electrode plate comprises a negative electrode current collector and a negative electrode active material layer disposed on at least one surface of the negative electrode current collector, the negative electrode active material layer comprises a negative electrode active material, the electrolyte comprises a phosphate ester additive, and the secondary battery satisfies a relationship as follows:

$$0.35 \leq \frac{m \times C \times P \times D_{V50}}{W} \leq 12.0$$

wherein $m$, in g/Ah, represents a filling coefficient of the electrolyte in the secondary battery;

$C$ represents a percent concentration by mass of the phosphate ester additive in the electrolyte of the secondary battery;

$P$, in g/cm$^3$, represents a compaction density of the negative electrode active material layer;

$D_{V50}$, in $\mu$m, represents a particle size of the negative electrode active material at 50% of cumulative volume distribution;

W, in g/1540.25 mm$^2$, represents an areal density of the negative electrode active material layer.

2. The secondary battery according to claim 1, wherein the secondary battery satisfies a relationship as follows:

$$1.9 \leq \frac{m \times C \times P \times D_{V50}}{W} \leq 3.0.$$

3. The secondary battery according to claim 1, wherein the filling coefficient $m$, in g/Ah, of the electrolyte is in a range of from 2 g/Ah to 5 g/Ah.

4. The secondary battery according to claim 1, wherein the percent concentration by mass $C$ of the phosphate ester additive in the electrolyte is in a range of from 0.1wt% to 3 wt%.

5. The secondary battery according to claim 1, wherein the compaction density $P$, in g/cm$^3$, of the negative electrode active material layer is in a range of from 1.2 g/cm$^3$ to 1.8 g/cm$^3$.

6. The secondary battery according to claim 1, wherein the $D_{V50}$, in $\mu$m, of the negative electrode active material is in a range of from 4$\mu$m to 18 $\mu$m.

7. The secondary battery according to claim 1, wherein the areal density $W$, in g/1540.25 mm$^2$, of the negative electrode active material layer is in a range of from 0.08 g/1540.25 mm$^2$ to 0.28 g/1540.25 mm$^2$.

8. The secondary battery according to any one of claims 1-7, wherein the electrolyte comprises a lithium salt and an organic solvent, and the electrolyte satisfies at least one selected from the group consisting of conditions (1)-(3) as follows:

   (1) the lithium salt comprises at least one selected from the group consisting of lithium hexafluorophosphate, lithium tetrafluoroborate, lithium bis(fluorosulfonyl)imide, lithium difluorophosphate, lithium difluoro(bisoxalato) phosphate, lithium bis(trifluoromethanesulfonyl)imide, lithium difluoro(oxalato)borate, and lithium bis(oxalato) borate;
   (2) the phosphate ester additive comprises at least one selected from the group consisting of tris(trimethylsilyl) phosphate and tripropargyl phosphate;
   (3) the organic solvent comprises at least one selected from the group consisting of a cyclic carbonate, a chain carbonate, and a chain carboxylate.

9. The secondary battery according to any one of claims 1-7, wherein the positive electrode plate comprises a positive electrode current collector and a positive electrode active material layer disposed on at least one surface of the positive electrode current collector, the positive electrode active material layer comprises a positive electrode active material, and the positive electrode active material comprises a lithium nickel cobalt oxide and/or a lithium iron oxide; and/or the negative electrode active material comprises at least one selected from the group consisting of graphite and a silicon-based material.

10. An electrical device, comprising the secondary battery according to any one of claims 1-9.

## INTERNATIONAL SEARCH REPORT

| International application No. |
| --- |
| **PCT/CN2024/073529** |

**A. CLASSIFICATION OF SUBJECT MATTER**

H01M10/0525(2010.01)i; H01M10/0567(2010.01)i; H01M4/13(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXTC, CNKI, DWPI, ENTXT: 注液量, 注液系数, 保液量, 保液系数, 磷酸酯, 负极, 阳极, 压实密度, 粒径, 面密度, injection volume, injection coefficient, retention volume, retention coefficient, phosphate ester, negative electrode, anode, compaction density, particle size, surface density

**C. DOCUMENTS CONSIDERED TO BE RELEVANT**

| Category* | Citation of document, with indication, where appropriate, of the relevant passages | Relevant to claim No. |
| --- | --- | --- |
| X | CN 114069054 A (EVE ENERGY CO., LTD.) 18 February 2022 (2022-02-18) description, paragraphs [0010]-[0178] | 1-10 |
| A | CN 104638234 A (SHENZHEN BTR NEW ENERGY MATERIALS CO., LTD.) 20 May 2015 (2015-05-20) entire document | 1-10 |
| A | JP 2019067590 A (HITACHI CHEMICAL CO., LTD.) 25 April 2019 (2019-04-25) entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 May 2024** | **13 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/073529**

| Patent document cited in search report | | | Publication date (day/month/year) | Patent family member(s) | | | Publication date (day/month/year) |
|---|---|---|---|---|---|---|---|
| CN | 114069054 | A | 18 February 2022 | None | | | |
| CN | 104638234 | A | 20 May 2015 | CN | 104638234 | B | 02 November 2018 |
| JP | 2019067590 | A | 25 April 2019 | None | | | |

Form PCT/ISA/210 (patent family annex) (July 2022)